# EUROPEAN PATENT SPECIFICATION

(11) **EP 2 595 360 B1**
(45) Date of publication and mention of the grant of the patent: **26.09.2018**
(21) Application number: 12000112.8
(22) Date of filing: 10.01.2012
(51) Int. Cl.: H04L 29/08

(54) **Display device and method for controlling the same**
Anzeigevorrichtung und Ansteuerverfahren dafür
Dispositif d'affichage et son procédé de contrôle

(30) Priority: 27.09.2011 KR 20110097474
(43) Date of publication of application: 22.05.2013
(73) Proprietor: LG ELECTRONICS INC., Yeongdeungpo-gu Seoul 150-721 (KR)
(72) Inventor: Im, Hyeongjin, Jinwi-myeon Pyeongtaek-si Gyeonggi-do 451-862 (KR); Kim, Yunjung, Jinwi-myeon Pyeongtaek-si Gyeonggi-do 451-862 (KR)
(74) Representative: Gunzelmann, Rainer

(56) References cited:
- WO-A1-2009/009504
- US-A1- 2006 236 258

## Description

### BACKGROUND OF THE INVENTION

### Field of the Invention

The present invention relates to a display device and a method for controlling the same, and more particularly, to a display device and a method for controlling the same, wherein user-interested information and advertisements are efficiently delivered to the user using a mobile device located around the display device. The display device is, for example, a network TV, a smart TV, a Hybrid Broadcast Broadband Television (HBBTV), an Internet TV, a web TV, or an Internet Protocol Television (IPTV).

### Discussion of the Related Art

Digital signage is an advertising billboard display that is implemented by combining various IT technologies such as hardware, software, content, and network technologies to deliver various information and advertisements. The digital signage is installed and operated in a large building having a large number of persons passing therethrough such as a bus terminal, a public office, a bus stop, a department store, a subway, an airport, a hotel, or a hospital or in a place where people stay for a certain time such as a business, an elevator, a theater, a restaurant, a shopping mall, or a store.

In the case of standalone digital signage as one conventional form of digital signage, a sign or a billboard is constructed of a digital information display such as a Plasma Display Panel (PDP), a Liquid Crystal Display (LCD), or a Light Emitting Diode (LED), and previously produced information and advertising content are stored in a storage unit and are manually reproduced (or played).

In the case of networked digital signage as another conventional digital signage, information and advertising content are transmitted to a digital information display through a communication network and a center performs content transmission, device status management, and the like.

The digital signage has been operated in a unidirectional advertisement scheme in which information and advertisement is unilaterally provided to the public. Thus, a recent digital signage system is provided with a platform for brand-customized and local advertisements based on interactions such as entrance for an event, movement of a selection information item, provision of product information through touch, and also has been developed so as to support product purchase through purchase induction to adjacent stores and use of coupon and map services.

However, such a digital signage system has a problem in that it should be assumed that users perform active operations in order to use the digital signage system as a user-interactive advertising and marketing tool. Thus, the degree of awareness of information and advertisement displayed through the digital signage is low unless the user wishes to actively use the digital signage and the efficiency of advertisement is also low since advertisement is unilaterally exposed, regardless of the interests and personal propensity of the user.

U.S. 2006/236258 discloses that tickers are populated with location-based information that is selected according to the geographic location of communication devices and is scheduled for display on the tickers according to specified criteria. Location-appropriate content is obtained either in real-time from the network or from a local data store at the communication device. Selected content is displayed according to the occurrence of a triggering event or based on a schedule that uses a score assigned to the content. In general location-based, context-aware content can be displayed on tickers associated with a variety of communication devices, including mobile communication devices and "immobile" or stationary personal computers.

WO 2009/009504 discloses a targeted-content-message-related profile for use with wireless access terminals (W-ATs) that may be generated by one or more usage-related rules on the W-AT itself. The usage generate rules may be used by the W-AT to generate a user profile, with the usage-related rule providing a dynamic property to the user profile. All or part of the user profile may then be used as a targeted-content-message-related profile for targeting content messages.

Accordingly, there is a need to provide a method for providing advertisement or information in a user customized manner as the market coverage of digital signage is being extended to encompass active and user-interactive advertising and marketing tools.

### SUMMARY OF THE INVENTION

Accordingly, the present invention is directed to a display device and a method for controlling the same that substantially obviate one or more problems due to limitations and disadvantages of the related art.

An embodiment of the present invention is to provide a display device and a method for controlling the
same, wherein interest information and advertisement are efficiently delivered to the user using a mobile device.

Another embodiment of the present invention is to define a data transmission protocol between a mobile device and a display device in order to provide user customized advertisement or information.

Another embodiment of the present invention is to provide a display device and a method for controlling the same, wherein content is selected and displayed using user related information received from a mobile device.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a display device includes a communication unit for receiving user related data from a mobile device, a memory for storing metadata of content and an advertising message associated with the content, a matching unit for extracting at least one matching element from the user related data and comparing the extracted matching element and at least one matching element included in the metadata of the content to select a content item, a controller for detecting whether or not the mobile device is in a communicable state at intervals of a preset period and controlling the communication unit according to the detection, and controlling the matching unit using the user related data, a display unit for displaying the selected content item, and an advertising message transmitter for transmitting an advertising message associated with the selected content item to the mobile device.

In another aspect of the present invention, a method for controlling a display device includes detecting a mobile device that is in a communicable state at intervals of a preset period, receiving user related data from the mobile device, extracting at least one matching element from the user related data and comparing the extracted matching element and at least one matching element included in metadata of content, selecting a specific content item according to a result of the comparison, and displaying the selected content item.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 illustrates an entire system that includes a display device according to an embodiment of the present invention;
FIG. 2 is a functional block diagram of a display device according to an embodiment of the present invention;
FIG. 3 illustrates an embodiment of a structure of content metadata that is used in a display device according to the present invention;
FIG. 4 illustrates an embodiment of a structure of content metadata that is used in a display device according to the present invention;
FIG. 5 illustrates an embodiment in which a matching unit in the display device according to the present invention compares matching elements;
FIG. 6 illustrates one embodiment of an advertising message that is transmitted from a display device according to the present invention;
FIG. 7 illustrates another embodiment of an advertising message that is transmitted from a display device according to the present invention;
FIG. 8 illustrates another embodiment of an advertising message that is transmitted from a display device according to the present invention;
FIG. 9 illustrates an embodiment of a content display schedule generated by a scheduler of the display device according to present invention;
FIG. 10 is a flowchart of a method for controlling a display device according to an embodiment of the present invention;
FIG. 11 is a flowchart of a data transmission protocol between a mobile device and a display device according to an embodiment of the present invention; and
FIG. 12 is a flowchart of a method for controlling a display device according to another embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

The words "module" and "unit", which are appended to terms describing components, are merely used for ease of explanation of the present invention and thus may be used interchangeably.

The display device described in this specification is, for example, a smart network TV which has computer support functions in addition to a broadcast reception function. Specifically, the display device has Internet-related functions in addition to the broadcast reception function. The display device may also include an interface that is more convenient to use than a handwriting input device, a touch screen, or a space remote control (for example, a pointing device). The display device may also be connected to the Internet and a computer through a wireless or wired Internet function to perform functions such as email, web browsing, banking, or gaming. The display device may use a standardized general-purpose OS to perform such various functions.

The display device described in the present invention can perform various user-friendly functions, for example, since various applications can be freely added to or removed from a general-purpose OS kernel.

Although the embodiments of the present invention will be described in detail with reference to the accompanying drawings and details included in the drawings, the present invention is not limited to or restricted by such embodiments.

Although most terms of elements in the present invention have been selected from general ones widely used in the art taking into consideration their functions in the invention, the terms may be changed depending on the intention or convention of those skilled in the art or the introduction of new technology. Some terms have been arbitrarily selected by the applicant and their meanings are explained in detail in the following description as needed. Thus, the definitions of the terms used in the invention should be determined based on the whole content of this specification together with the intended meanings of the terms rather than their simple names or meanings.

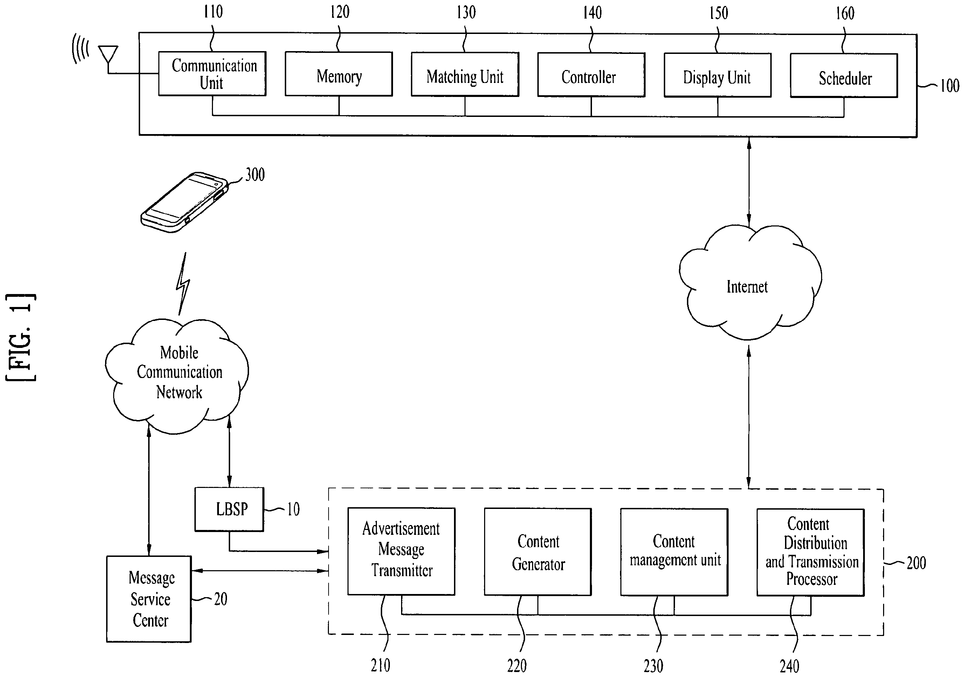

FIG. 1 illustrates an entire system that includes a display device according to an embodiment of the present invention. The entire system including the display device is described below with reference to FIG. 1. The entire system may be a digital signage system.

Digital signage is a digital display device that serves as a communication tool for deriving marketing, advertisement, and training effects of companies and experiences of customers and also provides not only broadcast programs but also specific information in a public place such as an airport, a hotel, or a hospital. Digital signage is also provided with software or a management platform that can control primary functions of conventional commercial digital information displays.

The digital signage system may include a display device 100, a content server 200, and a mobile device 300. Here, the display device(s) 100 may be implemented such that one display device 100 corresponds to the content server 200 or a plurality of display devices 100 corresponds to the content server 200.

The content server 200 generates or manages content that carries advertisement or information and data associated with the content. The content server 200 may include an advertising message transmitter 210, a content generator 220, a content management unit 230, and a content distribution and transmission processor 240. Of course, the content generator 220, the content management unit 230, and the content distribution and transmission processor 240 may not be included in the content server 200 but instead a content generation system, a content management system, and a content distribution and transmission processing system may be separately constructed.

The advertising message transmitter 210 may transmit an advertising message associated with content, which is being displayed on the display device 100, to the mobile device 300. The advertisement message transmitter 210 may be included in the display device 100 although the advertisement message transmitter 210 is illustrated as being included in the content server 200 in FIG. 1. In addition, instead of the advertisement message transmitter 210, the communication unit 110 or the controller 140 of the display device 100 may be designed to transmit an advertising message. This configuration will again be described later.

The content generator 220 generates content for display on the display device 100. The content generator 220 may generate content or may process content generated by another system into a format for display on the display device 100.

The content management unit 230 manages the content generated or processed by the content generator 220 using a Database Management System (DBMS). For example, the content management unit 230 easily manages a plurality of content items according to the type of a provided service such as content information, which is to be transmitted to and executed (for example, reproduced) on the display device 100, or content execution schedule information. In addition, the content management unit 230 transmits information and advertising content to the display device 100, performs determination as to whether content is being transmitted to the display device 100, and performs status management or the like of the display device 100.

The content management unit 230 may also allow content to be executed at an appropriate time and may report information associated with the result of the execution of the content. Accordingly, the content management unit 230 can manage content in an integrated manner (or in a systematic manner) and can also easily measure advertising effects.

When a plurality of content items is to be executed on the display device during one day, the content schedule information includes, as basic information, ID information of the display device, date, version information including system compatibility information, and the like and includes the order of execution of content items and definitions associated with execution rules. The content schedule information may be used to check whether or not content can be executed on the display device 100 and may also be used as advertisement index analysis information.

The content schedule information may include information associated with a network that is being used (such as network provider information, network connection type indicating whether the network is wired or wireless), content execution information, and the like. The content schedule information is especially useful when the number of display devices is great.

The content distribution and transmission processor 240 distributes content generated by the content generator 220 to a plurality of display devices 100 and allows the content to be transmitted to and executed (i.e., displayed) on the display device 100.

Generally, content transmission schemes are classified into a polling transmission scheme in which the display device 100 requests content from the content server 200 and a broadcast scheme in which the content server 200 transmits content to the display device 100 according to a time and a situation set by the operator (or manager).

The present invention may employ the two schemes. When the broadcast scheme is used, content may be distributed in a night time zone in which the rate of network use is relatively low in order to efficiently use a limited bandwidth in consideration of an increase in use of multimedia data services. However, the broadcast scheme is not suitable when data of content items often changes and when content needs to be quickly transmitted to and executed on the display device.

The polling transmission scheme can be selected in such a case. When the polling transmission scheme is used, the display device accesses the content server 200 at intervals of a predetermined period to check whether or not data to be transmitted is present and downloads content only when needed. However, if the number of display devices 100, i.e., the number of terminals, is great when the polling transmission scheme is used, the display devices 100 need to be implemented so as to spread traffic load of the content server 200.

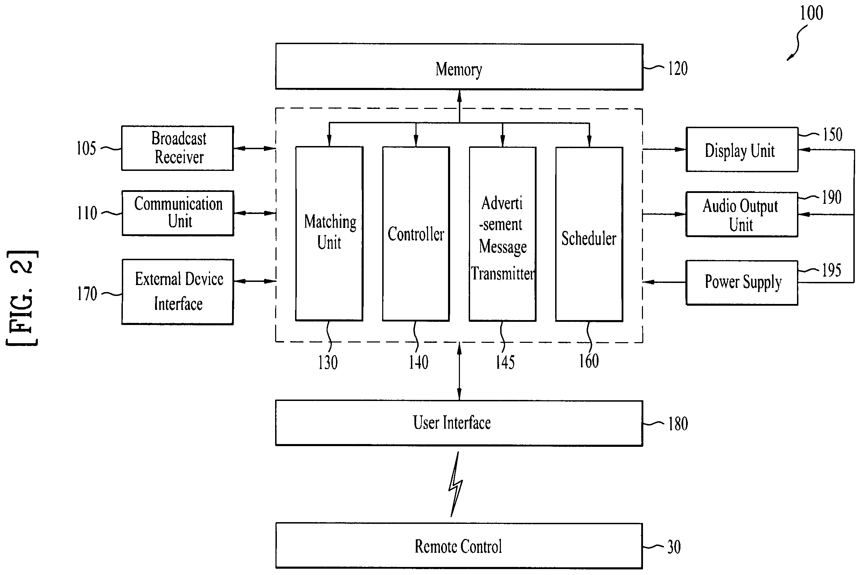

The display device 100 displays digital information and advertisement-related content including a video, an image, text, or the like according to a content reproduction schedule received from the content server 200 and transmits an advertising message associated with the displayed content to the mobile device 300. The display device is described below in more detail with reference to FIG. 2.

FIG. 2 is a functional block diagram of a display device according to an embodiment of the present invention. The embodiment of FIG. 2 is an example for explaining the present invention and an embodiment in which some modules are removed from the mobile device of FIG. 2 and an embodiment in which some modules are added to the mobile device of FIG. 2 also come within the scope of the present invention.

As shown in FIG. 2, a display device 100 according to an embodiment of the present invention includes a broadcast receiver 105, a communication unit 110, a memory 120, a matching unit 130, a controller 140, an advertisement message transmitter 145, a display unit 150, a scheduler 160, an external device interface 170, a user interface 180, an audio output unit 190, and a power supply 195.

The digital signage system uses display devices that are controlled to express different formats of content. In many cases, the digital signage system displays advertisement materials (or data) and allows an advertiser to purchase a display time.

Thus, the display device 100 according to the present invention includes the broadcast receiver 105 to display a received broadcast program when there is no need to display content. Since the display device includes the broadcast receiver 105 to allow general TV watching at times other than the time when advertisement is to be displayed, there is an advantage in that utilization of the display device is increased.

The broadcast receiver 105 may include a tuner (not shown), a demodulator (not shown), and a communication unit 105. The broadcast receiver 105 may be designed to include the tuner and the demodulator while not including the communication unit 105 and may also be designed to include the communication unit 105 while not including the tuner and the demodulator as needed.

The tuner selects a Radio Frequency (RF) broadcast signal(s) corresponding to a channel selected by the user or all channels that have been previously stored among RF broadcast signals received through an antenna. The demodulator receives and demodulates a Digital IF (DIF) signal produced conversion by the tuner.

A stream signal output from the demodulator may be input to the controller 140. The controller 140 performs demultiplexing, video/audio signal processing, and the like on the input signal and outputs a video signal to the display unit 150 and outputs an audio signal to the audio output unit 190.

The communication unit 110 may include, for example, an Ethernet terminal for connection to a wired network. The communication unit 110 may use, for example, a Wireless LAN (WLAN)(Wi-Fi), Wireless broadband (Wibro), World Interoperability for Microwave Access (Wimax), or High Speed Downlink Packet Access (HSDPA) communication protocol for connection to a wireless network.

The communication unit 110 may select and receive a desired application from among applications that are open to the public through a wireless network.

The external device interface 170 may connect the display device 100 to an external device. To accomplish this, the external device interface 170 may include an A/V input/output unit (not shown) or a wireless communication unit (not shown).

Accordingly, the external device interface 170 may be connected wirelessly or by wire to an external device such as a Digital Versatile Disk (DVD) player, a Blu-ray Disc (BD) player, a game console, a camera, a camcorder, or a computer (laptop). The external device interface 170 may receive an application or a list of applications in an adjacent external device and deliver the same to the controller 140 or the memory 120.

The display device 100 transmits and receives data to and from the content server 200 through a wired/wireless network including the Internet or the like since the content server 200 is not often installed adjacent to the display device 100. Accordingly, the display device 100 may be connected to the content server through the communication unit 110 and the external device interface 170 to transmit and receive content and content related data to and from the content server 200.

The memory 120 may be implemented using an Electrically Erasable Programmable Read-Only Memory (EEPROM) or the like and may store a program for various signal processing and control of the controller 140 and may also store the processed video, audio, or data signal.

The memory 120 may also function to temporarily store a video, audio, or data signal input from the external device interface 170 or the communication unit 110. The memory 120 may also store an application or an application list input from the external device interface 170 or the communication unit 110.

The user interface 180 delivers a signal input the user to the controller 140 or delivers a signal received from the controller 140 to the user. For example, the user interface 180 may receive and process a control signal such as a power on/off signal, a channel selection signal, or a screen setting signal from a remote control 30 according to various communication schemes such as an RF communication scheme or an IR communication scheme or may process a control signal received from the controller 140 so as to be transmitted to the remote control 30.

The display unit 150 converts a video signal, a data signal, an OSD signal, or the like processed by the controller 140 or a video signal, a data signal, or the like received through the external device interface 170 into R, G, and B signals and generates corresponding drive signals. The display unit 150 may be a PDP, an LCD, an OLED, a flexible display, a 3D display, or the like.

The audio output unit 190 receives an audio signal (for example, a stereo signal, a 3.1 channel signal, or a 5.1 channel signal) processed by the controller 140 and outputs corresponding audio. The audio output unit 190 may be implemented as various types of speakers.

The power supply unit 195 supplies corresponding power to each of the components of the display device 100. For example, the power supply unit 195 may supply power to the controller 140 which can be implemented in the form of a System On Chip (SOC), the display unit 150 for displaying images, and the audio output unit 190 for outputting audio.

The remote control 30 transmits a user input to the user interface 180. To accomplish this, the remote control 30 may use a Bluetooth, RF communication, IR communication, Ultra Wideband (UWB), or ZigBee scheme.

The following is a detailed description of the display device 100 that efficiently delivers interest information and advertisement to the user using a mobile device present near the display device 100.

To allow the communication unit 110 to receive user related data from a mobile device 300 which is located near the display device 100, the controller 140 detects whether or not the mobile device is at a communicable distance or is in a communicable state at intervals of a preset period and controls the communication unit 110 according to the detection.

The display device 100 and the mobile device 300 may communicate with each other using a mobile communication network, a Radio-Frequency IDentification (RFID), ZigBee, Bluetooth, Ultra Wide Band (UWB), or the like. While the method of detecting whether or not the mobile device 300 is in a communicable state varies depending on the communication scheme such as a signal strength measurement scheme, the present invention is not limited to such a specific communication method. Since the method of detecting whether or not the mobile device 300 is in a communicable state according to the communication method is known in the art, a detailed description thereof is omitted herein.

When the mobile device 300 has been detected, the communication unit 110 receives information associated with the mobile device 300 from the controller 140 to receive user related data from the mobile device 300. The mobile device 300 transmits the user related data of the mobile device 300 to the display device 100 through an application stored in the mobile device 300.

The user related data may include at least one of a position (location), age (or age range), sex, an interested product, an interested field, and a purchase history of the user. The user related data is used to provide customized advertisement to the user. The user related data may be allowed to be set in an application stored in the mobile device 300.

The memory 120 stores metadata of content and an advertisement message associated with the content. When the content is an advertisement, the metadata may include data such as age, sex, or the like of users who are the target of the advertisement.

The metadata includes matching elements such that content associated with the user related data can be extracted using the metadata.

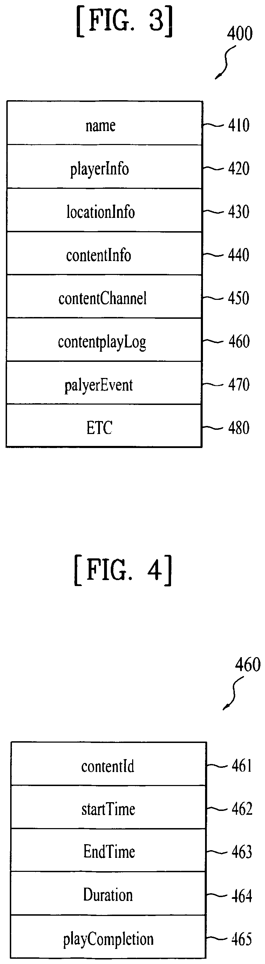

FIG. 3 illustrates an embodiment of a structure of content metadata that is used in a display device according to the present invention. As shown in FIG. 3, the metadata 400 may include data 410 associated with a terminal on which content is displayed, data 420 associated with a player that executes (or plays) the content, data 430 associated with a position at which the terminal is installed, data 440 associated with the type of content (such as video, image, or text), data 450 used to discriminate a network through the content is transmitted when content items are transmitted through different networks, data 460 indicating whether or not the content has actually been displayed on the terminal, an event record 470 of the player that plays the content, and ETC data 480.

The ETC data 480 may store matching elements. Since the matching elements are used to determine the association between content and the user through metadata of the content and the user related data received from the mobile device, the matching elements may vary depending on the target of the content and may also vary depending on the kind of products advertised by the content or the advertised time. Accordingly, such matching elements are included in the ETC data 480, thereby achieving an advantage in that it is easy to insert, change, and extend the matching elements.

The matching elements may include at least one of an age (or age range), sex, an interested product, an interested field, and a purchase history of the user. Here, the position of the user may be replaced with the position of the display device on which content is displayed and the age and sex of the user may be replaced with the age and sex of users whose are the target of the content. In addition, the interested product, the interested field, and the purchase history of the user may be replaced with a product, a product field, and similar products associated with the content.

For example, when the content is advertisement content associated with women's clothing, the ETC data 480 may include data associated with female, clothing, female age (or age range), and the like which are targeted by the advertisement. The content may be selected as a content item that matches the user related data when the user related data specifies female and the same age as that included in the ETC data 480.

In addition, as described above, the display device 100 mostly receives and displays content that is generated by an external entity, i.e., by the content server 200. Accordingly, as shown in FIG. 3, the content metadata includes data 410 indicating which terminal is to display the generated content, data 420 indicating which player is to execute (or play) the generated content (for example, indicating hardware type, software type, etc), and data 450 indicating a network transmission path and therefore it is possible to efficiently perform content distribution and transmission processes.

When the content metadata includes data 460 indicating whether or not content has actually been displayed on a terminal, the content metadata can be easily used for advertising effect measurement in the future.

FIG. 4 illustrates an embodiment of a structure of content metadata that is used in a display device according to the present invention. The data 460 indicating whether or not content has been executed is described below in more detail with reference to FIG. 4.

The data 460 indicating whether or not content has actually been executed on a terminal may include data items such as a unique number 461 assigned to each content item, a execution start time 462, an execution end time 463, an execution duration 464, execution completion indication information 465 indicating whether or not execution of content has been completed. Since the data 460 includes such data items, the data 460 may serve as a good guideline for analyzing and monitoring data associated with content that is executed on a display device.

Accordingly, the matching unit 130 extracts at least one matching element from the user related data and compares the at least one extracted matching element and at least one matching element included in metadata of each content item to select a content item which is the most associated with the user related data. A content item, which has been determined from the comparison to have the largest number of matching elements that match the matching elements of the user related data, is selected as the most associated content item.

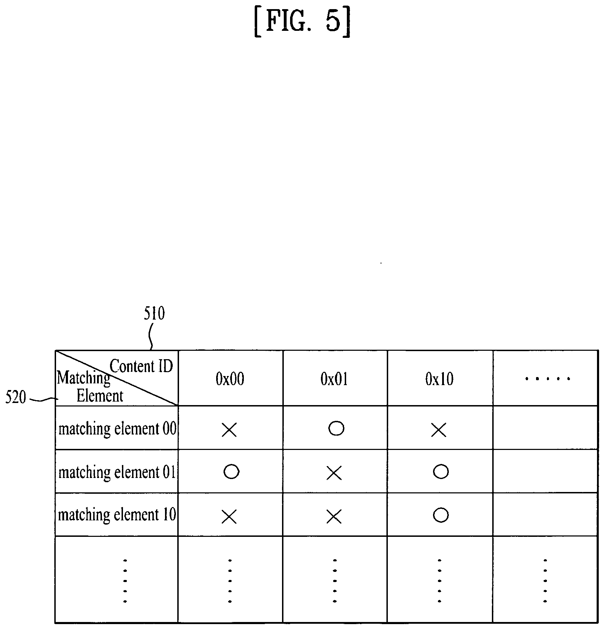

FIG. 5 illustrates an embodiment in which the matching unit in the display device according to the present invention compares matching elements. As shown in FIG. 5, information indicating whether or not each matching element 520 is included in each content type 510 may be stored in the form of a table.

It is also possible to generate a table associated with items of user related data instead of the content ID 510 shown in FIG. 5. Accordingly, information indicating whether or not each matching element 520 is included in the user related data may be stored in the form of a table and the table may then be matched with the table shown in FIG. 5, which makes it possible to efficiently find matching elements that match the matching elements of the user related data, and a highly associated content item can be selected taking into consideration, for example, the number of the matching elements that match the matching elements of the user related data.

When a matching content item has been selected according to the result of comparison by the matching unit 130, the display unit 150 displays the selected content item. Here, when the matching content item is not present in the memory 120, the communication unit 110 may request and receive the content item from the content server 200.

When a content item has not been selected through matching, the display unit 150 may display advertisement and digital information including a shop name, a commercial, an event of the shop, product guide of the shop, performance and exhibition information, traffic information, primary public facility information, news, and the like.

Since a content item which is highly associated with the user related data is selected through matching and the selected content item is then displayed as described above, there is an advantage in that it is possible to provide required information or advertisement from the viewpoint of the user and it is possible to increase advertisement efficiency from the viewpoint of the advertiser.

The advertisement message transmitter 145 can transmit an advertising message associated with the selected content to the mobile device using mobile communication, local wireless communication, or the like. The advertising message may include at least one of product information, discount information, event information, a mobile coupon, and a mobile ticket associated with the selected content.

Here, the advertisement message transmitter 145 may transmit the advertising message associated with the selected content only to a terminal which has subscribed to a preset service or only to a terminal which is located within a preset region.

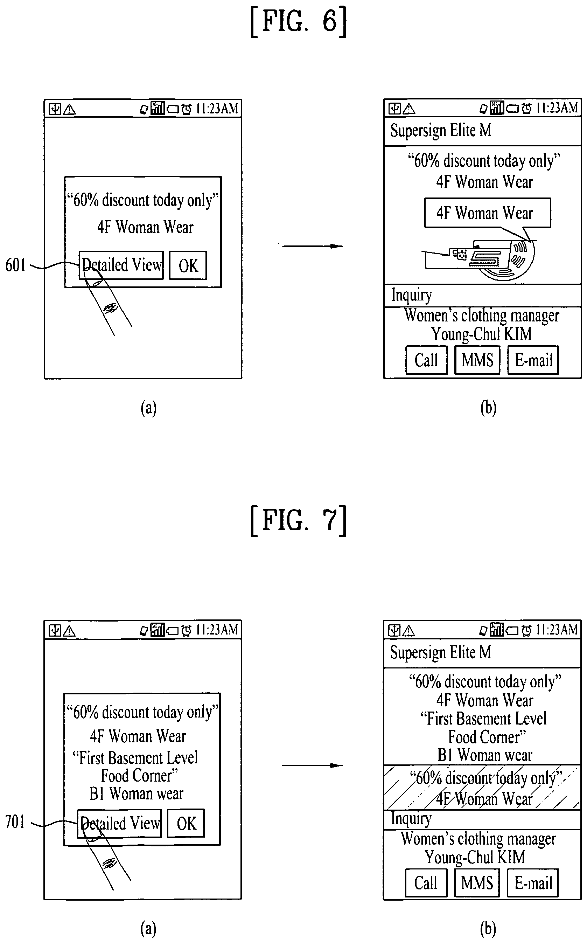

FIG. 6 illustrates a first embodiment of an advertising message that is transmitted from a display device according to the present invention. The first embodiment of the advertising message is described below with reference to FIG. 6.

When a preset specific application is installed on a mobile device, the user inputs user specific information and agrees with the provision of user location information or permits use of Bluetooth or the like through an installation procedure of the application.

When the mobile device is present within a distance where the mobile device is communicable with the display device according to the present invention, the controller 140 detects that the communicable mobile device is present and the communication unit 110 receives user specific information, i.e., user related data, from the mobile device. Of course, the communication unit 110 may receive the user related data directly from the mobile device and may also receive the user related data from an application management server. Unlike the above configuration, the display device may include an additional component for detecting whether or not a communicable mobile device is present at intervals of a predetermined period, thereby reducing load of the controller 140.

The matching unit 130 extracts matching elements from the user related data and compares matching elements included in metadata of each content item stored in the memory 120 to select a corresponding content item. Here, let us assume that the matching elements items to be compared are sex and product and the matching elements extracted from the user related data of the detected mobile device are female and clothing.

When the content item that the matching unit 130 has selected using the matching elements is advertisement content associated with women's clothing, the display device transmits an advertising message associated with female clothing discount information as shown in FIG. 6(a).

When the user of the mobile device selects a detailed view menu 601 as shown in FIG. 6(a), the display device provides a detailed guide as shown in FIG. 6(b). The guide of FIG. 6(b) may be provided in the form of a separate file format or may be implemented in the form of connection to a webpage or may also provide only link information to provide detailed guide information.

In the case in which a detailed guide is provided as shown in FIG. 6(b), it is possible to provide the way to contact a manager in charge (for example, wired connection, MMS, or email) and a corresponding means to allow the user to easily locate a desired product in a store and also to allow the user to directly contact a clerk in charge when the user desires to receive customer services such as product exchange and refund.

The first embodiment of the advertising message is applied only when the user has agreed the provision of user specific information and has also permitted the reception of advertising messages through an application or the like of the mobile device. However, the user may not permit use of user specific information even when the user installs the application. In this case, there is a problem in that it is difficult to perform the matching process since there is no user related data. A second embodiment in which an advertising message is provided in this case is described below with reference to FIG. 7.

FIG. 7 illustrates the second embodiment of an advertising message that is transmitted from a display device according to the present invention. Here, it is assumed that a preset specific application has been installed on the mobile device but the user has not input user specific information or has not permitted use of user specific information for purposes other than personal information check although the user has input the user specific information.

In the case in which the mobile device passes by the display device according to the present invention in this state, the controller 140 of the display device 100 detects that the communicable mobile device is present. However, the display device 100 cannot receive user related data. In this case, an advertising message associated with preset content or content that is being displayed on the display unit 150 is transmitted to the mobile device as shown in FIG. 7(a).

When the user selects a detailed view menu 701 of the mobile device on the screen of FIG. 7(a), detailed information is provided as shown in FIG. 7(b). However, since there is no user related data, it is possible to generate an advertising message including advertisement data associated with preset content that has been displayed or has been scheduled to be displayed in addition to advertisement data associated with content that is being displayed. In addition, the guide information of FIG. 7(b) may be provided in the form of a separate file format or may be implemented in the form of connection to a webpage or may also provide only link information to provide detailed guide information.

The first and second embodiments of the advertising message have a common feature that an advertising message can be transmitted to the mobile device although the first and second embodiments differ in whether or not user related data can be received from the mobile device. However, some users may deny reception of SMS messages as the number of advertising SMS messages has significantly increased recently and some users may have not installed the preset specific application on their mobile devices.

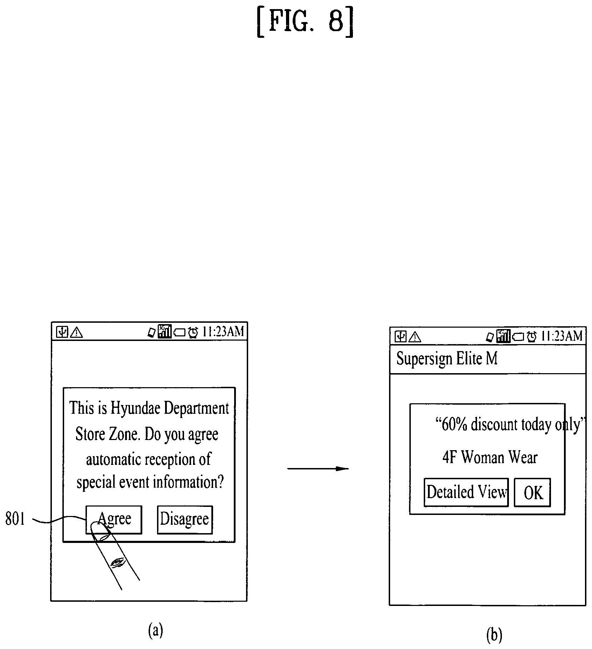

To address this situation, the controller 140 may transmit, to the mobile device, an advertising message associated with preset content, regardless of user related data, when the mobile device is located within a preset region. A third embodiment in which an advertising message is transmitted in such a case is described below with reference to FIG. 8.

FIG. 8 illustrates the third embodiment of an advertising message that is transmitted from a display device according to the present invention. Here, it is assumed that a preset specific application has been installed on the mobile device or user related data cannot be received.

When the mobile device is located within a distance where the mobile device is communicable with the display device according to the present invention, the controller 140 of the display device 100 detects that the communicable mobile device is present.

When the mobile device is located within a preset region, i.e., when the mobile device is located within a region such as a push zone which has been set such that preset information through advertising messages are transmitted within the region, a message, which asks whether or not the user agrees advertising message reception, is transmitted to the mobile device as shown in FIG. 8(a).

When the user of the mobile device selects an accept menu 801 on the screen of FIG. 8(a), the display device transmits an advertising message associated with preset content to the mobile device as shown in FIG. 8(b). The user can acquire detailed information by selecting a "detailed view" menu on the screen of FIG. 8(b).

The advertising message of the first to third embodiments can be transmitted from the advertisement message transmitter 145 in the display device using a mobile communication network or a wireless communication network. However, the advertisement message transmitter 210 of the content server 200 may also transmit the advertising message in the case in which the display device transmits associated data to the content server 200 through the communication unit 110 as shown in FIG. 1.

The advertisement message transmitter 210 may periodically acquire subscriber information of each mobile device 300 which is located in a preset adjacent region of each display device 100 through cooperation with a Location-Based Service Platform (LBSP) 10 of the mobile communication network and may select only a user, who has subscribed to a preset service from among users, who are located in the preset regions of the display devices 100 and may then transmit an advertising message associated with specific content to the selected user. Here, information indicating which advertising message is to be transmitted may be received from the communication unit 110.

The preset service may be a service that transmits an advertising message through an application installed on the mobile device as described above or may be a service that transmits an advertising message, regardless of user related data, within an information provision region such as a push zone.

When the advertisement message transmitter 210 has received an advertising message transmission request from the display device 100, the advertisement message transmitter 210 transmits a corresponding advertising message through a message service center 20. As described above, the advertisement message transmitter 210 may receive advertising message related information or identification (ID) information of a mobile device, which is to receive the advertising message, from the display device 100. In the case in which an advertising message corresponding to content has been stored in the content server 200, the advertisement message transmitter 210 can transmit the advertising message if only the ID information of the content is received.

The embodiment in which an advertising message is transmitted through the advertisement message transmitter 210 of the content server 200 as described above also comes within the scope of the present invention. The display device 100 can also operate in combination with the message service center 20 or the LBSP 10 of the mobile communication network in the case in which the advertisement message transmitter 145 of the display device 100 transmits an advertising message to the mobile device using the mobile communication network or the local communication network.

The scheduler 160 may generate a list of at least one content item selected by the matching unit 130 at intervals of a preset time and may then set a schedule of display of each content item of the list according to a preset criterion. The preset criterion may include, for at least one content item selected by the matching unit 130, at least one of the number of times the content item has been displayed, the time when the content item has been displayed, the date when the content item has been displayed, and the number of times an advertising message associated with the content item has been transmitted. Here, the controller 140 may perform a control operation for displaying the content item to be displayed according to the set schedule.

In an embodiment of setting of the schedule, the scheduler 160 may generate a list of content items which have been displayed a preset number of times or more or for which an associated advertising message has been transmitted to the mobile device a preset number of times or more and may generate a schedule taking into consideration, for example, the displayed or to-be-displayed time of each content item included in metadata of the content item.

In the case in which a schedule of a list of content items has been set with reference to content items for which an advertising message has been transmitted, it is possible to use a history of content-related advertising message transmission of each day, each month, or each year. Accordingly, there is an advantage in that, even when user related data of a mobile device detected around the display device is not present, it is possible to reflect general preferences of target users to increase advertisement efficiency.

A schedule may also be set taking into consideration a time zone when a large amount of specific content has been displayed, a time zone when the largest number of advertising messages associated with the specific content have been transmitted, or the like. That is, a schedule may be set such that content similar to the specific content is to be displayed in such a time zone.

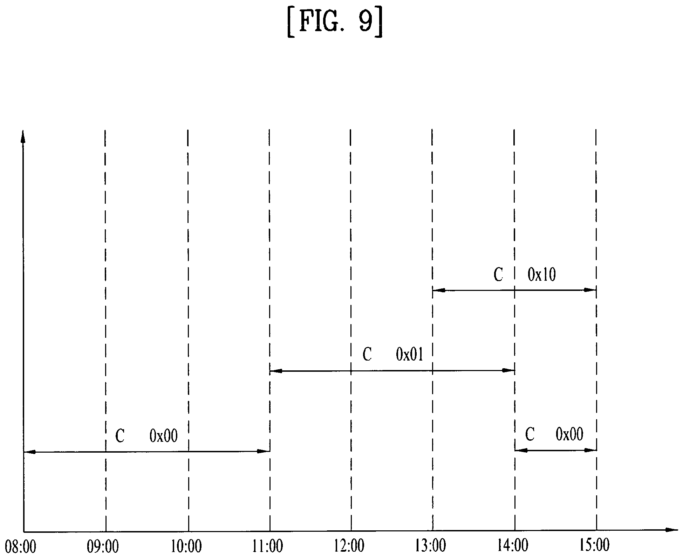

FIG. 9 illustrates an embodiment of a content display schedule generated by the scheduler of the display device according to present invention. IDs of content items that are scheduled to be displayed in content display time zones are shown in FIG. 9. In the display device, the controller 140 may perform a control operation for displaying each content item according to the schedule.

The schedule generated by the scheduler 160 differs from content schedule information that is generated by the content management unit 230 of the content server 200 shown in FIG. 1. The content schedule information generated by the content management unit 230 is information which specifies when and on which display device content is to be executed (displayed). On the other hand, the schedule of the content list generated by the scheduler 160 is information which sets, for each content item which has been executed in one display device or for which a related advertising message has been transmitted, the time when the content item is to be displayed or the time when an advertising message associated with the content item is to be transmitted.

Accordingly, simply by viewing the list generated by the scheduler 160, it is possible to easily determine which content is highly associated with the user related data and to easily analyze user preferences. In addition, since content is displayed according to the schedule generated by the scheduler 160 when user related data is not present, it is possible to increase advertisement efficiency compared to the method in which content is displayed indiscriminately.

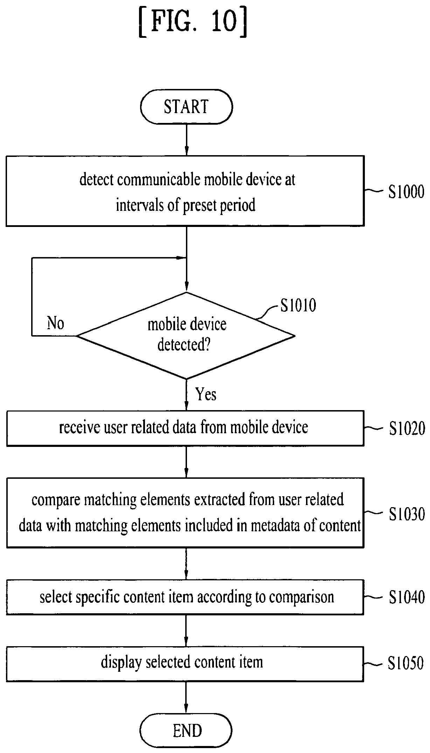

FIG. 10 is a flowchart of a method for controlling a display device according to an embodiment of the present invention. An embodiment of the method for controlling a display device is described below with reference to FIG. 10.

The display device detects a mobile device that is in a communicable state at intervals of a preset period (S1000). When the display device and the mobile device use Bluetooth or ZigBee communication for communication therebetween, the communicable state indicates a state in which the mobile device is within a distance where signals of the mobile device are detected and the signal strength is greater than a predetermined level. In this manner, the meaning of the communicable state may vary depending on the method of communication between the mobile device and the display device. The mobile device and the display device may perform communication with each other using a known scheme such as Radio-Frequency IDentification (RFID), ZigBee, Bluetooth, or Ultra Wide Band (UWB).

The display device checks whether or not a mobile device is detected (S1010). When a mobile device is detected, the display device receives user related data from the mobile device (S1020). The display device extracts at least one matching element from the user related data and compares the extracted matching element with matching elements included in metadata of each content item stored in the memory (S1030). The display device selects a specific content item according to the compared result (S1040). For example, the display device selects, as the specific content item, a content item that is most highly associated with the user related data.

The matching elements are elements based on which it is possible to determine whether or not the content is associated with the user related data and the degree of association between the content and the user related data increases as the number of matching elements increases. Thus, examples of the matching elements may include the position, age (or age range), sex, interested product, and the like of the user.

The display device displays the selected content item (S1050). Accordingly, it is possible to increase advertisement efficiency compared to the method in which content is displayed arbitrarily without such a procedure and it is also possible to reduce the exposure of users to indiscriminate advertisements.

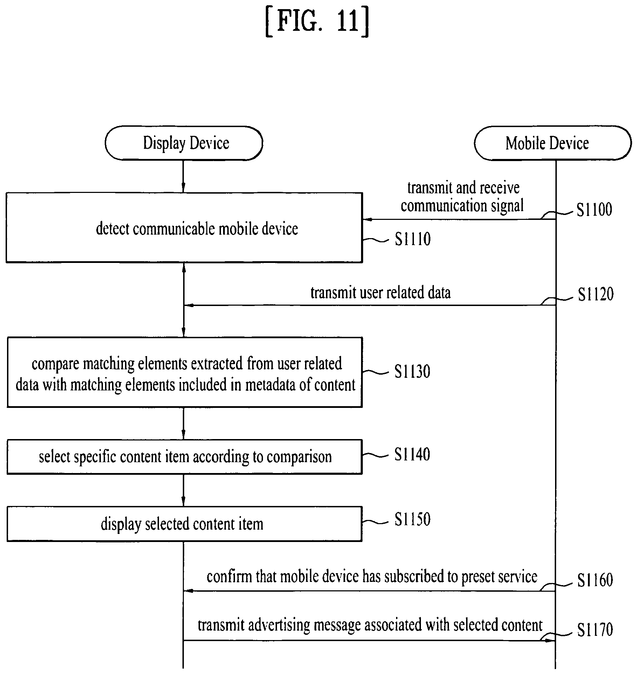

FIG. 11 is a flowchart of a data transmission protocol between a mobile device and a display device according to an embodiment of the present invention. An embodiment of the data transmission protocol between the mobile device and the display device is described below with reference to FIG. 11.

When the communication unit of the display device has received a communication signal from the mobile device (S1100), the controller detects that the mobile device is in a communicable state (S1110).

When the mobile device transmits user related data to the display device through an application or the like installed in the mobile device (S1120), the display device compares matching elements extracted from the user related data with matching elements included in metadata of each content item (S1130). The user related data may include at least one of a position (location), age, sex, an interested product, an interested field, and a purchase history of the user.

The metadata of content may include data such as the age and sex of target users of the content. That is, data items included in the metadata of the content may be the matching elements and thus content associated with the user related data may be extracted through metadata of the content.

The display device selects specific content which is highly associated with the user related data according to the result of comparison through matching (S1140) and displays the selected content (S1150).

In the case in which the display device provides a preset service that provides an advertising message associated with content to the mobile device, the display device checks whether or not the mobile device is a terminal which has subscribed to the preset service (S1160). When it is assumed that the mobile device receives an advertising message associated with specific content as a terminal which has subscribed to the preset service, the advertising message associated with the specific content may be transmitted to the mobile device (S1170).

In addition, even when the display device is not a terminal which has subscribed to the preset service, the display device may be set to transmit an advertising message associated with specific content such as content which is currently being displayed, regardless of the user related data, in the case in which the mobile device is located within a preset specific region.

The preset specific region is a region such as a store that has been set such that event information is provided within the region since providing such event information within the region such as a store where a special event is always held is advantageous (or effective) for both the seller and the consumer.

However, since indiscriminate advertising message transmission may give discomfort to users, it is preferable that the display device transmit an advertising message to only a mobile device, which has agreed advertising message reception, after asking whether or not the user of the mobile device desires to receive the advertising message while notifying the user that the current region is an advertising message transmission region before transmitting the advertising message. In addition, the advertising message may include at least one of product information, discount information, event information, a mobile coupon, and a mobile ticket associated with the content.

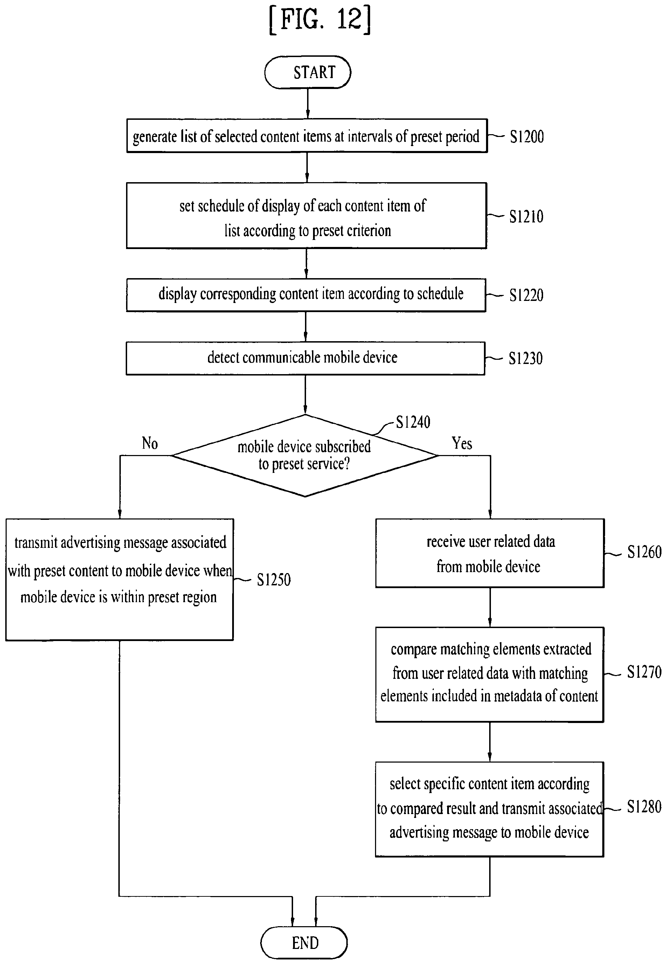

FIG. 12 is a flowchart of a method for controlling a display device according to another embodiment of the present invention. The method for controlling the display device according to another embodiment of the present invention is described below with reference to FIG. 12.

The display device generates a list of content items selected at intervals of a preset period, for example, a list of content items that have been displayed on the display device during a specific period or a list of content items associated with advertising messages that have been transmitted from the display device to the mobile device during a specific period (S1200).

The display device sets a schedule of display of each content item of the list according to a preset criterion (S1210) and displays the content item according to the schedule (S1220).

The list and the schedule of the list are generated for content items, which are highly associated with the user, taking into consideration the time when the content has been executed (or displayed), the number of times the content has been executed, matching elements which match those of the user related data, and the like in order to display the content in a time zone in which advertisement efficiency is high.

Accordingly, it is preferable that information associated with execution of each content item and matching elements, which have matched those of the user related data, and the like be stored together with the content in the memory.

Storing a history of display of content taking into consideration user related data and displaying the content according to the history is more efficient than displaying content arbitrarily since it will increase advertisement efficiency from the viewpoint of the content producer or the advertisement client and will increase the probability of encountering required advertisements from the viewpoint of the consumer.

When the display device has detected a communicable mobile device while displaying content (S1230), the display device checks whether or not the mobile device has subscribed to a preset service (S1240). The preset service may be a service that provides content or an advertising message suitable for the user using user specific information provided by the user.

upon determining that the mobile device has not subscribed to the preset service (No in step S1240), the display device checks whether or not the mobile device is located within a preset region. The preset region is a region, such as a store or shop where a discount event is always held, in which there is a need to provide discount information, sale information, or the like to the user, regardless of whether or not the user has subscribed to the service.

Thus, when the mobile device is located within such a region, an advertising message associated with preset content may be transmitted to the mobile device if the user has agreed reception of the mobile device even when the user has not subscribed to the service (S1250).

Upon determining that the mobile device has subscribed to the preset service (Yes in step S1240), the display device receives user related data from the mobile device (S1260). A description of the user related data is omitted herein since the user related data has already described above.

The display device may compare matching elements extracted from the user related data with matching elements included in metadata of each content item (S1270) and select a specific content item according to the compared result and then may transmit an advertising message associated with the selected content item to the mobile device (S1280). A detailed description of matching element comparison is omitted herein since it has already been described above.

The advertising message includes at least one of product information, discount information, event information, a mobile coupon, and a mobile ticket associated with the content. The advertising message may be transmitted directly from the display device and may also be transmitted from a server or system such as the content server which is connected wirelessly or by wire to the display device.

As is apparent from the above description, the embodiments of the present invention have a variety of advantages.

For example, it is possible to provide a variety of content in a user customized manner according to location, time, and usage using a mobile device.

In addition, it is possible to define a data transmission protocol between a mobile device and a display device for providing user customized advertisement or information.

Further, it is possible to increase the efficiency of advertisement using content since content is selected using user related data received from the mobile device.

Although the embodiments of the drawings have been separately described for ease of explanation, it is also possible to implement new embodiments by combining the embodiments of the drawings. In addition, a computer readable recording medium, which stores a program for performing each of the embodiments described, may also be designed as needed and such a computer readable recording medium also comes within the scope of the present invention.

A display device and a method for controlling the same according to the present invention are not limited in application to the configurations and methods of the embodiments described above and all or some of the embodiments may be selectively combined to implement various modifications.

The method for controlling a display device according to the present invention can be embodied as processor readable code stored in a processor readable medium provided in a network device. The processor readable medium includes any type of storage device that stores data which can be read by a processor. Examples of the processor readable medium include Read Only Memory (ROM), Random Access Memory (RAM), CD-ROMs, magnetic tapes, floppy disks, optical data storage devices, and so on. The processor readable medium can also be embodied in the form of carrier waves such as signals transmitted over the Internet. The processor readable medium can also be distributed over a network of coupled processor systems so that the processor readable code is stored and executed in a distributed fashion.

Although the present invention has been illustrated and described above with reference to the specific embodiments, the present invention is not limited to the specific embodiments and it will be apparent to those skilled in the art that various modifications can be made to the embodiments without departing from the scope of the present invention as disclosed in the accompanying claims and such modifications should not be construed as departing from the spirit or scope of the present invention.

Both product and method inventions have been described in this specification and descriptions of the two inventions may be applied as being supplementary to each other.

## Claims

1. A display device (100), comprising:
a broadcast receiver (105) for receiving a broadcast program;
a communication unit (110) for receiving user related data from a mobile device (300);
a memory (120) for storing metadata of content and an advertising message associated with the content;
a matching unit (130) for
extracting at least one matching element from the user related data and comparing the extracted matching element and at least one matching element included in the metadata of content to select a content item;
a controller (140) for
detecting whether or not the mobile device (300) is in a communicable state at intervals of a preset period,
controlling the communication unit (110) according to the detection,
controlling the matching unit (130) using the user related data, and
performing a control operation for displaying the selected content item according to a set schedule;
a display unit (150) for displaying the selected content item when the controller (140) detects that the mobile device (300) is present;
wherein said broadcast receiver (105) is capable of displaying the received broadcast program when there is no need to display the selected content item; and
an advertising message transmitter (210) for transmitting an advertising message associated with the selected content item to the detected mobile device (300) when the controller (140) detects the presence of the mobile device (300).

2. The display device according to claim 1, wherein the advertising message transmitter (210) transmits the advertising message associated with the selected content item to the mobile device (300) when the mobile device (300) is a terminal that has subscribed to a preset service.

3. The display device according to claim 1, wherein the advertising message transmitter (210) transmits an advertising message associated with preset content to the mobile device (300) regardless of the user related data when the mobile device (300) is located within a preset region.

4. The display device according to claim 2 or 3, wherein the advertising message includes product information, discount information, event information, a mobile coupon, and a mobile ticket associated with the content.

5. The display device according to claim 1, wherein the matching element includes at least one of a position, age, sex, an interested product, an interested field, and a purchase history of a user.

6. The display device according to claim 1, further comprising a scheduler (160) for generating a list of at least one content item selected by the matching unit (130) at intervals of a preset time and setting a schedule of display of each content item of the list according to a preset criterion,
wherein the controller (140) performs a control operation for displaying a corresponding content item according to the schedule.

7. The display device according to claim 6, wherein the preset criterion includes, for at least one content item selected by the matching unit, at least one of the number of times the content item has been displayed, a time when the content item has been displayed, a date when the content item has been displayed, and the number of times an advertising message associated with the content item has been transmitted.

8. A method for controlling a display device (100), the method comprising:
detecting a mobile device (300) that is in a communicable state at intervals of a preset period;
receiving at least one of user related data from the mobile device (300) and a broadcast program from a broadcast receiver (105);
extracting at least one matching element from the user related data and comparing the extracted matching element and at least one matching element included in metadata of content;
selecting a specific content item according to a result of the comparison; performing a control operation for displaying the selected content item according to a set schedule;
displaying the selected content item when the mobile device (300) is present; and
displaying the received broadcast program when there is no need to display the selected content item.

9. The method according to claim 8, further comprising transmitting an advertising message associated with the selected content item to the mobile device (300) when the mobile device (300) is a terminal that has subscribed to a preset service.

10. The method according to claim 8, further comprising transmitting an advertising message associated with preset content to the mobile device (300) regardless of the user related data when the mobile device (300) is located within a preset region.

11. The method according to claim 9 or 10, wherein the advertising message includes product information, discount information, event information, a mobile coupon, and a mobile ticket associated with the content.

12. The method according to claim 8, wherein the matching element includes at least one of a position, age, sex, an interested product, an interested field, and a purchase history of a user.

13. The method according to claim 8, further comprising:
generating a list of at least one selected content item at intervals of a preset time;
setting a schedule of display of each content item of the list according to a preset criterion; and
displaying a corresponding content item according to the schedule.

14. The method according to claim 13, wherein the preset criterion includes, for at least one selected content item, at least one of the number of times the content item has been displayed, a time when the content item has been displayed, a date when the content item has been displayed, and the number of times an advertising message associated with the content item has been transmitted.

15. A computer readable recording medium storing a program for performing the method according to any one of claims 8 to 14.

## Patentansprüche

1. Anzeigevorrichtung (100), umfassend:
einen Rundfunkempfänger (105) zum Empfangen eines Rundfunkprogramms;
eine Kommunikationseinheit (110) zum Empfangen von benutzerbezogenen Daten von einer mobilen Vorrichtung (300);
einen Speicher (120) zum Speichern von Metadaten von Inhalt und einer Werbenachricht, die mit dem Inhalt verknüpft ist;
eine Anpassungseinheit (130) zum Entnehmen mindestens eines Anpassungselements aus den benutzerbezogenen Daten und zum Vergleichen des entnommenen Anpassungselements und mindestens eines Anpassungselements, das in den Metadaten von Inhalt enthalten ist, um ein Inhaltselement auszuwählen;
einen Controller (140) zum
Detektieren, ob sich die mobile Vorrichtung (300) in Intervallen einer voreingestellten Periode in einem kommunikationsfähigen Zustand befindet oder nicht,
Steuern der Kommunikationseinheit (110) gemäß der Detektion,
Steuern der Anpassungseinheit (130) unter Verwendung der benutzerbezogenen Daten, und
Ausführen eines Steuerungsvorgangs zum Anzeigen des ausgewählten Inhaltselements gemäß einem eingestellten Terminplan;
eine Anzeigeeinheit (150) zum Anzeigen des ausgewählten Inhaltselements, wenn der Controller (140) detektiert, dass die mobile Vorrichtung (300) vorhanden ist;
wobei der Rundfunkempfänger (105) in der Lage ist, das empfangene Rundfunkprogramm anzuzeigen, wenn es nicht notwendig ist, das ausgewählte Inhaltselement anzuzeigen; und
einen Werbenachrichtensender (210) zum Senden einer Werbenachricht, die mit dem ausgewählten Inhaltselement verknüpft ist, an die detektierte mobile Vorrichtung (300), wenn der Controller (140) das Vorhandensein der mobilen Vorrichtung (300) detektiert.

2. Anzeigevorrichtung nach Anspruch 1, wobei der Werbenachrichtensender (210) die Werbenachricht, die mit dem ausgewählten Inhaltselement verknüpft ist, an die mobile Vorrichtung (300) sendet, wenn die mobile Vorrichtung (300) ein Endgerät ist, das einen voreingestellten Dienst abonniert hat.

3. Anzeigevorrichtung nach Anspruch 1, wobei der Werbenachrichtensender (210) eine Werbenachricht, die mit dem voreingestellten Inhalt verknüpft ist, an die mobile Vorrichtung (300) unabhängig von den benutzerbezogenen Daten sendet, wenn sich die mobile Vorrichtung (300) innerhalb einer voreingestellten Region befindet.

4. Anzeigevorrichtung nach Anspruch 2 oder 3, wobei die Werbenachricht eine Produktinformation, eine Rabattinformation, eine Ereignisinformation, einen mobilen Gutschein und eine mobile Eintrittskarte umfasst, die mit dem Inhalt verknüpft sind.

5. Anzeigevorrichtung nach Anspruch 1, wobei das Anpassungselement mindestens eines von einer Position, einem Alter, einem Geschlecht, einem interessierenden Produkt, einem Interessengebiet und einem Einkaufsverlauf eines Benutzers umfasst.

6. Anzeigevorrichtung nach Anspruch 1, ferner umfassend einen Terminplaner (160) zum Erzeugen einer Liste mit mindestens einem Inhaltselement, das durch die Anpassungseinheit (130) in Intervallen einer voreingestellten Zeit ausgewählt wird, und zum Einstellen eines Terminplans für das Anzeigen jedes Inhaltselements der Liste gemäß einem voreingestellten Kriterium,
wobei der Controller (140) einen Steuerungsvorgang zum Anzeigen eines entsprechenden Inhaltselements gemäß dem Terminplan ausführt.

7. Anzeigevorrichtung nach Anspruch 6, wobei das voreingestellte Kriterium für mindestens ein Inhaltselement, das durch die Anpassungseinheit ausgewählt wird, mindestens eines von der Häufigkeit, mit der das Inhaltselement angezeigt wurde, einer Uhrzeit, zu der das Inhaltselement angezeigt wurde, einem Datum, zu dem das Inhaltselement angezeigt wurde, und der Häufigkeit, mit der eine Werbenachricht, die mit dem Inhaltselement verknüpft ist, gesendet wurde, umfasst.

8. Verfahren zum Steuern einer Anzeigevorrichtung (100), wobei das Verfahren umfasst:
Detektieren einer mobilen Vorrichtung (300), die sich in Intervallen eines voreingestellten Zeitraums in einem kommunikationsfähigen Zustand befindet;
Empfangen mindestens eines benutzerbezogenen Datenelements von der mobilen Vorrichtung (300) und eines Rundfunkprogramms von einem Rundfunkempfänger (105);
Entnehmen mindestens eines Anpassungselements aus den benutzerbezogenen Daten und Vergleichen des entnommenen Anpassungselements und mindestens eines Anpassungselements, das in den Metadaten des Inhalts enthalten ist;
Auswählen eines spezifischen Inhaltselements gemäß einem Ergebnis des Vergleichs;
Ausführen eines Steuerungsvorgangs zum Anzeigen des ausgewählten Inhaltselements gemäß einem eingestellten Terminplan;
Anzeigen des ausgewählten Inhaltselements, wenn die mobile Vorrichtung (300) vorhanden ist; und
Anzeigen des empfangenen Rundfunkprogramms, wenn es nicht notwendig ist, das ausgewählte Inhaltselement anzuzeigen.

9. Verfahren nach Anspruch 8, ferner umfassend das Senden einer Werbenachricht, die mit dem ausgewählten Inhaltselement verknüpft ist, an die mobile Vorrichtung (300), wenn die mobile Vorrichtung (300) ein Endgerät ist, das einen voreingestellten Dienst abonniert hat.

10. Verfahren nach Anspruch 8, ferner umfassend Senden einer Werbenachricht, die mit dem voreingestellten Inhalt verknüpft ist, an die mobile Vorrichtung (300) unabhängig von den benutzerbezogenen Daten, wenn sich die mobile Vorrichtung (300) innerhalb einer voreingestellten Region befindet.

11. Verfahren nach Anspruch 9 oder 10, wobei die Werbenachricht eine Produktinformation, eine Rabattinformation, eine Ereignisinformation, einen mobilen Gutschein und eine mobile Eintrittskarte, die mit dem Inhalt verknüpft sind, umfasst.

12. Verfahren nach Anspruch 8, wobei das Anpassungselement mindestens eines von einer Position, einem Alter, einem Geschlecht, einem interessierenden Produkt, einem Interessengebiet und einem Einkaufsverlauf eines Benutzers umfasst.

13. Verfahren nach Anspruch 8, ferner umfassend:
Erzeugen einer Liste mit mindestens einem Inhaltselement, das durch die Anpassungseinheit (130) in Intervallen einer voreingestellten Zeit ausgewählt wird;
Einstellen eines Terminplans für das Anzeigen jedes Inhaltselements der Liste gemäß einem voreingestellten Kriterium; und
Anzeigen eines entsprechenden Inhaltselements gemäß dem Terminplan.

14. Verfahren nach Anspruch 13, wobei das voreingestellte Kriterium für mindestens ein ausgewähltes Inhaltselement mindestens eines von der Häufigkeit, mit der das Inhaltselement angezeigt wurde, einer Uhrzeit, zu der das Inhaltselement angezeigt wurde, einem Datum, zu dem das Inhaltselement angezeigt wurde, und der Häufigkeit, mit der eine Werbenachricht, die mit dem Inhaltselement verknüpft ist, gesendet wurde, umfasst.

15. Computerlesbares Aufzeichnungsmedium, das ein Programm zum Ausführen des Verfahrens nach einem der Ansprüche 8 bis 14 umfasst.

## Revendications

1. Dispositif d'affichage (100), comprenant :
un récepteur de diffusion (105) pour recevoir un programme de diffusion ;
une unité de communication (110) pour recevoir des données associées à un utilisateur à partir d'un dispositif mobile (300) ;
une mémoire (120) pour stocker des métadonnées d'un contenu et un message de publicité associé au contenu ;
une unité de mise en correspondance (130) pour
extraire au moins un élément de mise en correspondance à partir des données associées à un utilisateur et
comparer l'élément de mise en correspondance extrait et au moins un élément de mise en correspondance inclus dans les métadonnées d'un contenu pour sélectionner un élément de contenu ;
un dispositif de commande (140) pour
détecter si le dispositif mobile (300) est ou non dans un état apte à communiquer à des intervalles d'une période préréglée,
commander l'unité de communication (110) selon la détection,
commander l'unité de mise en correspondance (130) à l'aide des données associées à un utilisateur, et
réaliser une opération de commande pour afficher l'élément de contenu sélectionné selon un programme défini ;
une unité d'affichage (150) pour afficher l'élément de contenu sélectionné lorsque le dispositif de commande (140) détecte que le dispositif mobile (300) est présent ;
ledit récepteur de diffusion (105) étant capable d'afficher le programme de diffusion reçu lorsqu'il n'y a pas besoin d'afficher l'élément de contenu sélectionné ; et
un émetteur de message de publicité (210) pour transmettre un message de publicité associé à l'élément de contenu sélectionné au dispositif mobile (300) détecté lorsque le dispositif de commande (140) détecte la présence du dispositif mobile (300).

2. Dispositif d'affichage selon la revendication 1, dans lequel l'émetteur de message de publicité (210) transmet le message de publicité associé à l'élément de contenu sélectionné au dispositif mobile (300) lorsque le dispositif mobile (300) est un terminal qui s'est abonné à un service prédéfini.

3. Dispositif d'affichage selon la revendication 1, dans lequel l'émetteur de message de publicité (210) transmet un message de publicité associé à un contenu prédéfini au dispositif mobile (300) indépendamment des données associées à un utilisateur lorsque le dispositif mobile (300) est situé dans une région prédéfinie.

4. Dispositif d'affichage selon la revendication 2 ou 3, dans lequel le message de publicité comprend des informations de produit, des informations de remise, des informations d'événement, un coupon mobile et un ticket mobile associé au contenu.

5. Dispositif d'affichage selon la revendication 1, dans lequel l'élément de mise en correspondance comprend au moins l'un parmi une situation, un âge, un sexe, un produit d'intérêt, un domaine d'intérêt et un historique d'achat d'un utilisateur.

6. Dispositif d'affichage selon la revendication 1, comprenant en outre un dispositif de planification (160) pour générer une liste d'au moins un élément de contenu sélectionné par l'unité de mise en correspondance (130) à des intervalles d'un temps préréglé et définir un programme d'affichage de chaque élément de contenu de la liste selon un critère prédéfini,
le dispositif de commande (140) réalisant une opération de commande pour afficher un élément de contenu correspondant selon le programme.

7. Dispositif d'affichage selon la revendication 6, dans lequel le critère prédéfini comprend, pour au moins un élément de contenu sélectionné par l'unité de mise en correspondance, au moins l'un parmi le nombre de fois où l'élément de contenu a été affiché, une heure à laquelle l'élément de contenu a été affiché, une date à laquelle l'élément de contenu a été affiché, et le nombre de fois où un message de publicité associé à l'élément de contenu a été transmis.

8. Procédé pour commander un dispositif d'affichage (100), le procédé comprenant :
détecter un dispositif mobile (300) qui est dans un état apte à communiquer à des intervalles d'une période préréglée ;
recevoir des données associées à un utilisateur à partir du dispositif mobile (300) et/ou un programme de diffusion à partir d'un récepteur de diffusion (105) ;
extraire au moins un élément de mise en correspondance à partir des données associées à un utilisateur et comparer l'élément de mise en correspondance extrait et au moins un élément de mise en correspondance inclus dans des métadonnées de contenu ;
sélectionner un élément de contenu spécifique selon un résultat de la comparaison ;
réaliser une opération de commande pour afficher l'élément de contenu sélectionné selon un programme défini ;
afficher l'élément de contenu sélectionné lorsque le dispositif mobile (300) est présent ; et
afficher le programme de diffusion reçu lorsqu'il n'y a pas besoin d'afficher l'élément de contenu sélectionné.

9. Procédé selon la revendication 8, comprenant en outre transmettre un message de publicité associé à l'élément de contenu sélectionné au dispositif mobile (300) lorsque le dispositif mobile (300) est un terminal qui s'est abonné à un service prédéfini.

10. Procédé selon la revendication 8, comprenant en outre transmettre un message de publicité associé à un contenu prédéfini au dispositif mobile (300) indépendamment des données associées à un utilisateur lorsque le dispositif mobile (300) est situé dans une région prédéfinie.

11. Procédé selon la revendication 9 ou 10, dans lequel le message de publicité comprend des informations de produit, des informations de remise, des informations d'événement, un coupon mobile et un ticket mobile associé au contenu.

12. Procédé selon la revendication 8, dans lequel l'élément de mise en correspondance comprend au moins l'un parmi une situation, un âge, un sexe, un produit d'intérêt, un domaine d'intérêt et un historique d'achat d'un utilisateur.

13. Procédé selon la revendication 8, comprenant en outre :
générer une liste d'au moins un élément de contenu sélectionné à des intervalles d'un temps préréglé ;
définir un programme d'affichage de chaque élément de contenu de la liste selon un critère prédéfini ; et
afficher un élément de contenu correspondant selon le programme.

14. Procédé selon la revendication 13, dans lequel le critère prédéfini comprend, pour au moins un élément de contenu sélectionné, au moins l'un parmi le nombre de fois où l'élément de contenu a été affiché, une heure à laquelle l'élément de contenu a été affiché, une date à laquelle l'élément de contenu a été affiché, et le nombre de fois où un message de publicité associé à l'élément de contenu a été transmis.

15. Support d'enregistrement lisible par ordinateur stockant un programme pour réaliser le procédé selon l'une quelconque des revendications 8 à 14.
